# EUROPEAN PATENT APPLICATION

(11) **EP 2 845 680 A1**
(43) Date of publication of application: **11.03.2015**
(21) Application number: 14182976.2
(22) Date of filing: 01.09.2014
(51) Int. Cl.: B23P 19/06, B21J 15/02, B21J 15/14, B21J 15/32, B29C 65/60, B29C 65/00, F16B 37/06

(54) **A method for the attachment of a fastener element to a workpiece, a combination of a washer with a die button and also a die button**

(30) Priority: 04.09.2013 DE 102013217640
(71) Applicant: Profil Verbindungstechnik GmbH & Co. KG, 61381 Friedrichsdorf (DE)
(72) Inventor: Diehl, Oliver, 61350 Bad Homburg v.d.H. (DE); Humpert, Richard, 61231 Bad Nauheim (DE); Lembach, Andreas, 64295 Darmstadt (DE)
(74) Representative: Manitz, Finsterwald & Partner GbR

(57) **Abstract**

A method for the attachment of the fastener element (10,10') to a workpiece (40) with the aid of a washer (42) and also a die button (50) are described. The fastener element has a flange (12) of larger diameter, a rivet section (14) of smaller diameter which extends away from the flange and a workpiece contact surface (16) at the side of the flange adjacent the rivet section. The die button (50) is provided to receive a washer and has a central post (52) the end face (54) of which lies at least substantially flush with the side of the washer adjacent to the workpiece (40). The non-pre-pierced workpiece (40)is pierced by the said end face (54) of the central post (52) and the free end (33) of the rivet section (14) and the rivet section of the fastener element is subsequently deformed to form a rivet bead (60). Moreover, a die button and a combination of a die button with a washer are claimed.

## Description

The present invention relates to a method for the attachment of a fastener element to a workpiece with the aid of a washer, in particular of a metal washer and also a die button and a combination of a washer with a die button.

Such methods and combinations are known from US 7,160,047 in which the workpiece consists of a composite material which is defined there as a brittle or resilient component which consists for example of a material having a hollow spaces or pores, such as for example plastics, wood, metal foams, metals which are filled with hollow bodies or plastics or another relatively soft material and which are optionally present in the form of a sandwich construction or as a composite material, for example in the form of a single ply or multi-ply structure with for example two sheet metal or plastic layers with a core of one of the above-named substances or materials.

The present invention is concerned in contrast with workpieces which consists of a fiber or fabric reinforced plastic and in particular those with a duroplastic matrix material, with the invention have also being suitable for use with workpieces in the form of sheet metal parts. In contrast to the materials defined in US 7,160,047 the present workpieces are relatively hard and thin so that other considerations have to be made for the processing of the materials in the sense of attachment of fastener elements.

Types of fastener elements can be considered which have a flange or larger diameter, a rivet section of smaller diameter, which extends away from the flange and a workpiece contact surface at the side of the flange adjacent to the rivet section, with the workpiece contact surface surrounding the rivet section. Examples for such fastener elements include in particular, amongst other things, bolt elements which are obtainable in commerce with the name SBF from the present applicants and nut elements with the designations RSN and RSF which are likewise obtainable from the present applicants.

The SBF element is for example described in US patent 4,555,838 and in the US patent 4,459,073. The SBF element and the method for attachment of the element are moreover described in detail in US patent 4,543,701 and in US patent 4,727,646. An improved version of the SBF bolt can be found in EP-B-1430229.

RSN elements are for example described in EP-A-0 539 739 and RSF elements in US-A-4,610,072.

The present invention is based on the object of making available a method by which fastener elements of the named kind can be attached to workpieces which consist in particular of a fiber or fabric reinforced plastic, and in particular those with a duroplastic matrix material, and which is optionally also suited to be used in slightly modified form with workpieces in the form of sheet metal parts.

Under the designation fiber or fabric reinforced plastic one understands composite materials with high strength fibers such as for example aramid fibers, carbon fibers or glass fibers which are either present as relatively short filling fibers or as long filaments, or in the form of a fabric manufactured from filaments, and embedded in the matrix material of plastic. Thermoplastic materials can admittedly be used as the plastic; however, duroplastic plastics are normally used for coachwork components. The corresponding components are generally present in panel form, as a rule with a three-dimensional shape.

For the solution of this object a die button is provided in the method of the invention which is formed at one end face to receive the washer and has a central post the end face of which at least lies flush with the side of the washer adjacent to the workpiece and optionally projects beyond this side of the washer. The non-pre-pierced workpiece is arranged in front of the said end face of the central post i.e. in front of or on the washer and is pierced in the region of the end face of the die button by means of the free end of the rivet section of the fastener element, which is moved towards the side of the workpiece remote from the die button, in conjunction with the central post. The rivet section of the fastener element is thereby guided through a ring gap located between the hole of the washer and the central post of the die button and is reshaped, by means of a generally concavely rounded ring surface of the die button surrounding the central post, to a ret bead at the side of the washer located remote from the workpiece, with the workpiece and the washer being clamped between the workpiece contact surface of the fastener element and the rivet bead.

The invention is initially based on the recognition that with adequate support of the fiber or fabric reinforced workpiece on the washer and on the end face of the central post, with a ring gap being present between the hole rim of the hole of the washer and the central post, the pressure of the free end of the rivet section on the workpiece leads to the duroplastic matrix material being crumbled there in the cold state, i.e. at approximately room temperature, whereby the piercing slug which arises has approximately the size of the end face of the central post of the die button and the rivet section can be guided through the ring gap, without the rivet section being hindered in this movement by the crumbled plastic or by the fiber/fabric remainders still project from the hole rim of the so pierced workpiece or from the piercing slug.

The movement of the hollow rivet section through the said ring gap and the subsequent beading over of the rivet section into the rivet bead at the in particular semi-toroidal concave ring surface leads to a situation in which the workpiece and the washer are clamped between the workpiece contact surface of the fastener element and the rivet bead. The washer then serves as a load distributor so that the surface pressure between the washer and the workpiece can be kept within permissible limits as a result of the area of the washer. Nevertheless a high quality rivet bead can be formed so that the resistance to pull-out both for a bolt element and also for a nut element is relatively high. In this way, a second component can be secured to the workpiece and indeed, when using a bolt element, by a shaft part passing through a hole in the second component and with a nut, which is screwed onto the shaft part of the bolt element. For the attachment of a nut element to the workpiece, the second component can be secured to the workpiece in that a bolt is screwed into the thread of the nut element through an aperture in the second component.

In this embodiment of the invention the piercing slug is pressed, for a bolt element, into the hollow space of the rivet section and there stiffens the connection between the rivet bead and the washer.

Depending on how long the hollow cavity of the rivet section is and on how thick the workpiece is it can be of advantage to so extend the central post that the piercing slug is pushed against the end of the hollow space. Furthermore, the central post can be provided with a conical end face which conically indents the piercing slug. In this way the diameter of the piercing slug is reduced somewhat, whereby it can be more easily pressed into the hollow cavity. Furthermore, the ring gap can be made smaller in its radial width with the quantity of crumbled material being reduced and the crumbling proceeding more easily. In addition, the piercing of the workpiece in the form of a sheet metal part can be carried out in this manner, with, for example, the washer serving to stiffen the attachment of the fastener element to a thin sheet metal part or to a soft sheet metal part.

Features providing security against rotation are advantageously provided at the workpiece contact surface and are brought, by the movement of the fastener element towards the workpiece, into engagement with the material of the workpiece. In this way the security against rotation of the attachment of the fastener element to the workpiece is increased.

The fastener element can, as already be mentioned, be a bolt element, the shaft of which preferably has a thread and extends away from the side of the flange remote from the rivet section, with the piercing slug punched out from the workpiece being brought inside the rivet section and into engagement with the base of the hollow rivet section by the central post of the die button.

As an alternative to this the fastener element can be a hollow nut element, with the piercing slug which is punched out of the workpiece being brought within the hollow rivet section i.e. into engagement with the ring shoulder which is formed by the transition of the hollow rivet section into the internal thread, by means of the central post of the die button and being subsequently removed from the rivet section.

The removal of the piercing slug can for example take place on attachment of the hollow nut element by a plunger which is moved through the thread of the nut element.

As likewise already mentioned the end face of the central post can have an at least substantially conical raised portion which is used in order to deform the piercing slug conically and thus reduces its diameter whereby its introduction into the rivet section is facilitated.

The present invention furthermore includes the combination of a washer, in particular a metal washer, with a die button for the attachment of a fastener element having a rivet section to a workpiece, with the die button being provided to receive the washer and having a central post the end face of which lies at least substan-tially flush with the side of the washer adjacent to the workpiece and optionally projects beyond this side of the washer, with a ring gap being provided between the hole of the washer and the central post of the die button and with the central post being surrounded at the side of the washer remote from the workpiece by a concavely rounded ring surface of the die button.

In this connection the washer can with advantage be accommodated in a ring recess of the die button which surrounds the central post, with the side of the washer adjacent to the workpiece being at least substantially flush with the end face of the die button radially outside of the washer. The ring recess centers the washer in relation to the post and thus ensures that the ring gap has a uniform width.

The invention furthermore includes a die button in accordance with claim 10 with further developments of the die button being described in the claims 11 and 12.

Summarizing a pierced washer is used which on the one hand serves during the punching in operation as a die button so that a fiber reinforced material is supported at the position where it is cut and such that the cutting forces do not lead to the material being drawn into the die button and thereby crumbled. In the punched in state the washer serves on the other hand to reduce the surface pressure between the bolt and the plastic in the pull-through direction.

Further developments of the invention will be described in more detail with respect to practical embodiments and with reference to the drawing in which are shown:
- Figs. 1A to 1C: an SBF bolt element in accordance with EP-B-1430229 and indeed in an end view (Fig. 1A) of the rivet section of the bolt element in the direction of the arrow I of Fig. 1B, in a partly sectioned side view (Fig. 1B) and in a perspective representation (Fig. 1 C),
- Figs. 2A to 2C: representations of three phases of the attachment of the bolt element in accordance with Figs. 1A to 1C to a workpiece, with Fig. 2A showing the starting position, Fig. 2B showing the positioning of a die button beneath the workpiece and Fig. 2C the finished component assembly,
- Figs. 3A to 3C: a series of drawings corresponding to Figs. 1A to 1C but with a modified form of the bolt element,
- Figs. 4A to 4C: a series of drawings corresponding to Figs. 2A to 2C but with use of a bolt element in accordance with Figs. 3A to 3C,
- Figs. 5A to 5C: a series of drawings corresponding to Figs. 1A to 1C but with a nut element in place of a bolt element and
- Figs. 6A to 6D: a series of drawings corresponding to Figs. 2A to 2C with the additional Fig. 6D showing the finished component assembly after a removal of the piercing slug.

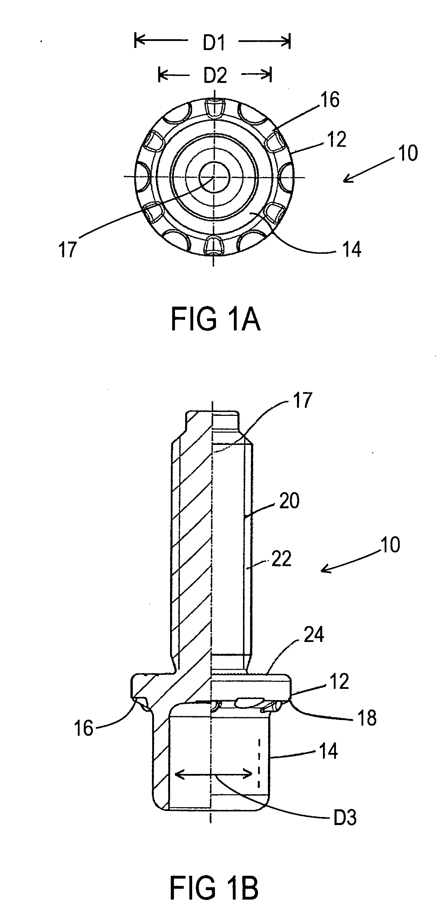

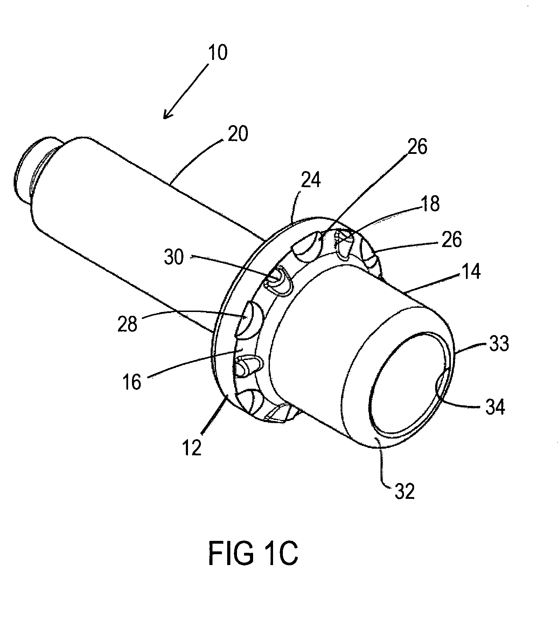

The Figs. 1A to 1C show a fastener element 10, here in the form of a bolt element. The bolt element has a flange 12 of larger diameter D1, a rivet section 14 of smaller diameter D2 which extends away from the flange 12 and a workpiece contact surface 16 at the side 18 of the flange 12 adjacent the rivet section 14, with the workpiece contact surface 16 surrounding the rivet section 14. The bolt element 10 further has a shaft part 20 having a thread cylinder 22 which projects away from the side of the flange 12 remote from the rivet section 14 and is surrounded by a ring-like contact surface 24, to which a component (not shown) can be attached, with the further component being provided with a hole through which the shaft part 20 is passed, with the component being able to be clamped against the contact surface 24 by means of a nut (likewise not shown) which is screwed onto the thread cylinder.

Furthermore, features 26 providing security against rotation, in the form of recesses 28 and ribs 30 arranged between them, are provided at the workpiece contact surface 16. The free end of the bolt element is provided with a rounded edge 32 and a conical cutting surface 34.

As can be seen from Fig. 1B the features 32 and 34 providing security against rotation are formed here on a conical workpiece contact surface 16, i.e. the element is not an element in accordance with the EP-B-1430229 but is formed in accordance with EP-B-1497073. A conical design in accordance with EP-B-1381785 could also be considered. The use of a conical workpiece contact surface 16 is however not essentially required, the workpiece contact surface 16 could for example lie in a plane which stands perpendicular to the central longitudinal axis 17 of the bolt element.

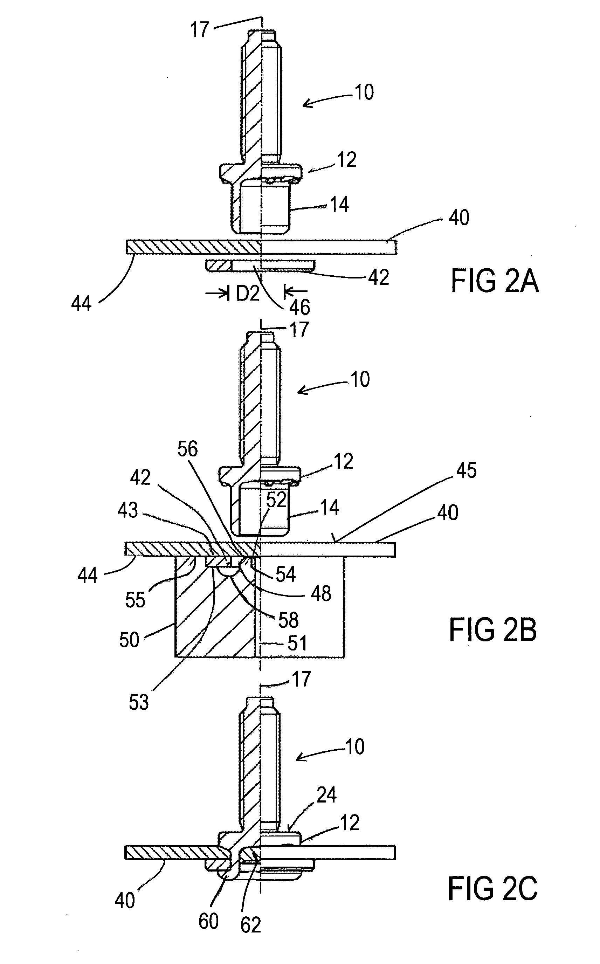

The method for the attachment of the bolt element 10 to the workpiece will now be described in more detail with reference to Figs. 2A to 2C.

Fig. 2A shows the bolt element 10 in the position in accordance with Fig. 1B arranged directly above the workpiece 40, with a pre-holed washer 42 being arranged at the side 44 of the workpiece remote from the bolt element 10. The hole 46 of the washer is aligned coaxial to the central longitudinal axis 17 of the bolt element and has a diameter D2 which corresponds to the outer diameter D2 of the rivet section 14.

The workpiece 40 consists here of a fiber or fabric reinforced plastic as defined above, could however also be formed by a sheet metal part. Also the section of the workpiece 40 shown here is illustrated as being planar it could also be three-dimensionally shaped or be a planar region of a three-dimensionally shaped workpiece 40. Furthermore, the workpiece does not have to consist of a single component but could rather consist of two or more workpieces arranged above one another which either all consist of a fiber or fabric reinforced plastic or only some of them.

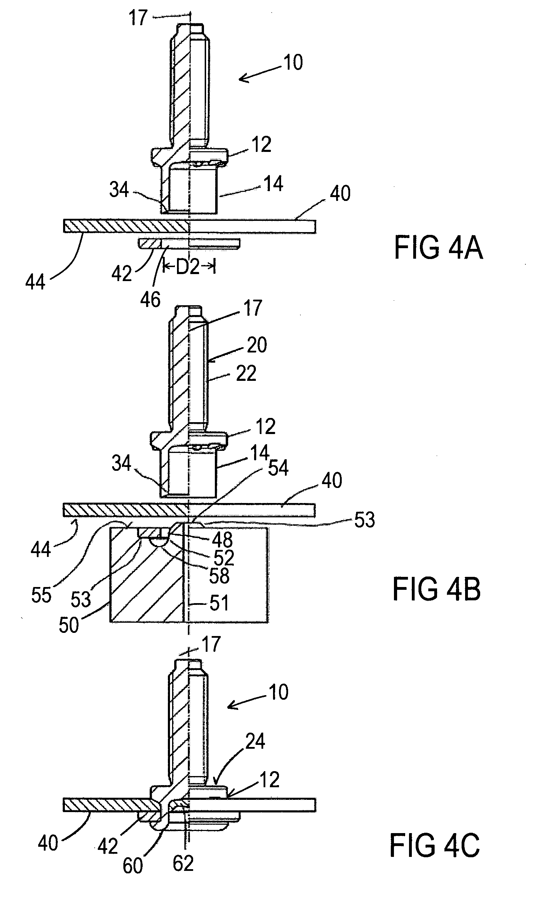

As can be seen from Fig. 2B a die button 50 is then positioned beneath the workpiece with the die button 50 being provided to receive the washer 42 and also having a central post 52 the end face 54 of which lies flush with the end face 55 of the die button outside of the washer 42 and with the side 43 of the washer 42 adjacent to the workpiece. The end face 54 of the central post 52 can optionally project beyond the side 43 of the washer 42, as shown in Fig. 4B. The die button 50 further has a centrally arranged longitudinal bore 51 for pressure relief.

In this example the washer is arranged in a ring recess 53 of the die button 50 which is surrounded by a ring surface 55 of the die button 50. A ring gap 48 is located between the rim of the hole 46 of the washer and the central post 52 of the die button since the central post 52 has an outer diameter at the mid height of the washer which essentially corresponds to the inner diameter D3 of the rivet section 14. In this respect the central post 53 diverges in the downward direction in Fig. 2B and merges into a concave semi-toroidal ring recess 58. The washer 42 is thus centered by the ring recess and kept coaxial to the central longitudinal axis 17 of the bolt element 10.

It is not essential for the washer to be surrounded by a ring surface 55 of the die button, it is ultimately sufficient if the washer is centered by some form of features of shape such as for example pins (not shown) which are inserted into the die button 50.

The non-pre-pierced workpiece 40 arranged in front of the said end face 54 of the central post or in front of or on the washer 42 and is pierced in the region of the end face of the die button 50 by means of the free end 33 of the rivet section 14 of the fastener element 10 in conjunction with the central post 52 when the bolt element moved onto the side 45 of the workpiece remote from the die button. The rivet section of the fastener element is subsequently passed through the ring gap located between the hole 46 of the washer and the central post of the die button and is formed into a rivet bead 60 by an approximately concavely rounded ring surface 58 of the die button 50 surrounding the central post at the side of the washer remote from the workpiece 40. In this way, the workpiece 40 and the washer 42 which firmly contacts the workpiece 40 are clamped between the workpiece contact surface 16 of the fastener element and the rivet bead 60.

During the piercing of the workpiece 40 with the free end 33 of the rivet section 14 the material of the workpiece 40 is crumbled, when it is a fiber or fabric reinforced plastic (in particular a duroplastic plastic) which directly contacts the end face of the rivet section, and the reinforcement fibers or filaments are parted.

The piercing slug 62 initially lies on the end face of the central post 52 and is pressed into the end region of the hollow space of the rivet section and clamped there firmly as can be seen from Fig. 2C. The piercing slug 62 has, as a result of the crumbling of the plastic, a diameter in the clamped state which is somewhat smaller than D2 and somewhat larger than D3. Accordingly, the piercing slug 62 is held in a force-transmitting manner by compression forces in the hollow space of the rivet section directly at the end of the hollow space. The piercing slug 62 remains inside the hollow space of the rivet section 14 when the finished component assembly in accordance with Fig. 2C is separated from the die button 50 and stiffens the rivet bead 60 and thus improves the bond of the fastener element 10 to the workpiece 40.

The conically diverging shape of the central post assists the reshaping of the rivet section 14 to a rivet bead 60 through the concave ring surface in that it initiates the outwardly directed beading over movement of the rivet section and the stretching of the rivet section 13 associated therewith.

Although the method is so described as can be recognized with respect to Figs. 2A to 2C and a procedure of this kind is entirely possible it is however in practice also possible to allow the method to take place differently. For example, the washer 42 is normally first inserted in the ring recess 53 and the workpiece 40 is only then positioned above the die button 50.

For the attachment of the fastener element 10 it is normally introduced into a setting head not shown here (but well known per se) which delivers such fastener elements one after the other to a sequence of workpieces 40. In this connection a spring-loaded hold down member (likewise not shown but also well-known per se) is normally used which surrounds the fastener element and which serves to press the workpiece against the end face of the die button 50 and/or against the washer or the central post 52 so that the workpiece can be held in its intended position. The fastener element 10 is normally moved in the direction towards the workpiece by means of a plunger (likewise not shown) of the setting head in the direction towards the workpiece, with the plunger having a centrally arranged bore (not shown) to receive the shaft part 20 of the fastener element 10. Beneath the workpiece 40 the die button 50, which has a cylindrical shape, is inserted into a corresponding bore (not shown) of a tool (likewise not shown).

As usual for the attachment of fastener elements, this discussion relates to a setting head which is arranged at the upper tool of a press or at an intermediate platen of the press, whereas the tool which receives the die button 50 is the intermediate platen of the press or the lower tool of the press respectively. An inverted arrangement would also be possible in which the setting head is arranged at the lower tool of the press or at an intermediate platen of the press, whereas the die button 50 is then located at the intermediate platen or at the upper tool of the press respectively.

It is in no way essential to use a press for the attachment of the fastener element to the workpiece, by way of example a robot, for example in accordance with the European patent 0 691 900 could be used, with the die button 50 and the setting head then being carried by the robot. However, a percussion tool or another tool could also be used for the attachment of the functional element arrangement to the component, for example a tool in accordance with one of the following protective rights DE-PS 197 47 267, EP 0 890 397 or DE-PS 197 01 088.

It is indeed generally customary to attach fastener elements 10 to a workpiece with the central longitudinal axis 17 arranged vertically. However, an orientation of this kind is in no way essential. Instead of this the longitudinal axis 17 could have any desired orientation in space. Accordingly, when geometrical terms such as vertical or top or bottom or above and below are used in this application, then this is to be understood in such a way that the designations simply relate to the orientation of the corresponding figure and should in no way be restrictively construed.

Furthermore, it is pointed out that the features 28, 30 providing security against rotation are brought, by the strong pressing forces that are used, fully into engagement with the material of the workpiece 40 so that a higher resistance to torque results, which prevents the bolt element being turned relative to the workpiece.

When the fastener element is a bolt element 10 the shaft part 20, which preferably has a thread 22, extends away from the side 24 of the flange 12 remote from the rivet section 14 and the piercing slug 26 which is punched out of the workpiece is thus brought inside of the rivet section 14 and is brought by the central post 52 of the die button 50 into engagement with the base of the hollow rivet section.

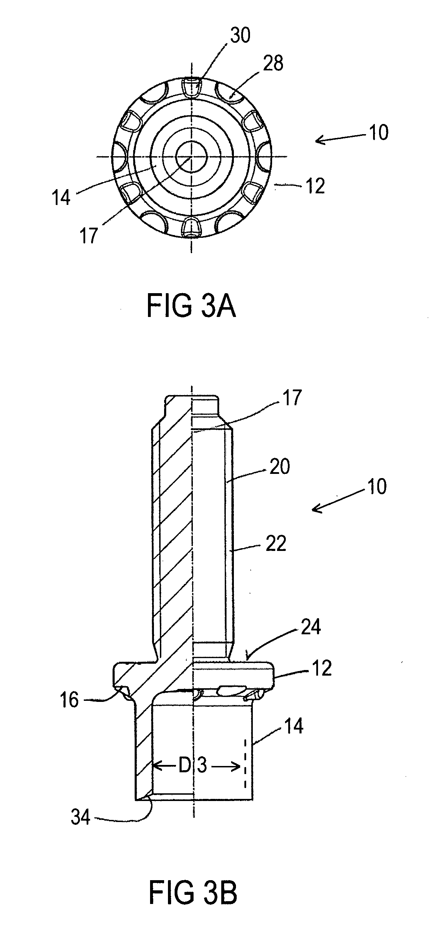

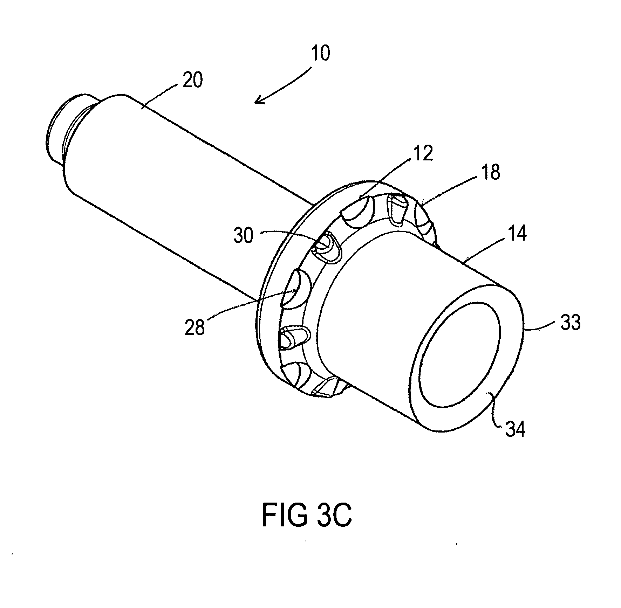

The Figs. 3A to 3C show an alternative form of the bolt element 10 which is provided with the same reference numerals as are used in Figs. 1A to 1C and 2A to 2C. It will be understood, that parts which are provided with the same reference numerals have the same shape or function as those previously described unless something is stated to the contrary, so that a renewed description of these parts or their functions is not required but rather the previous description applies. This convention applies for all parts described here and the further description will now concentrate only on the differences.

The bolt element 10 of Figs. 3A to 3C is distinguishable of the bolt element of Figs. 1A to 1C in that the free end face 33 of the rivet section is formed by a conical surface 34 over at least substantially the full radial width.

The bolt element 10 of Figs. 3A to 3C can be attached to a workpiece with the method in accordance with Figs. 2A to 2C but it is better to use a slightly modified method in accordance with Figs. 4A to 4C. This method and the corresponding apparatus is distinguished from that of Figs. 2A to 2C in that the central post here has a free end face 54 which projects beyond the end face 55 of the die button 50, in this example by approximately half the thickness of the workpiece. Here, the central post 52 is also provided with a rounded edge 56 and is flat at the front end radially inside of the rounded edge and stands there perpendicular central longitudinal axis 17 of the bolt element. As an alternative to this central post could be of conical shape at its free end and indeed such that the conical shape converges in the direction away from the die button 50.

The method in accordance with Figs. 4A to 4C takes place in principle precisely as described in connection with the embodiment of Figs. 2A to 2C with the exception of the piercing of the workpiece 40. This conical surface 34 of the rivet section also leads here to the desired crumbling of the workpiece, when it is a fiber or fabric reinforced plastic with a duroplastic matrix material. The cooperation with the projecting shape of the center post leads however to the piercing slug 62 adopting an indented or conical shape and it is thus able to be pressed more easily into the hollow space of the rivet section. The shaping 34 at the end of the rivet section 14 can also be of advantage when a metallic workpiece 40 is involved.

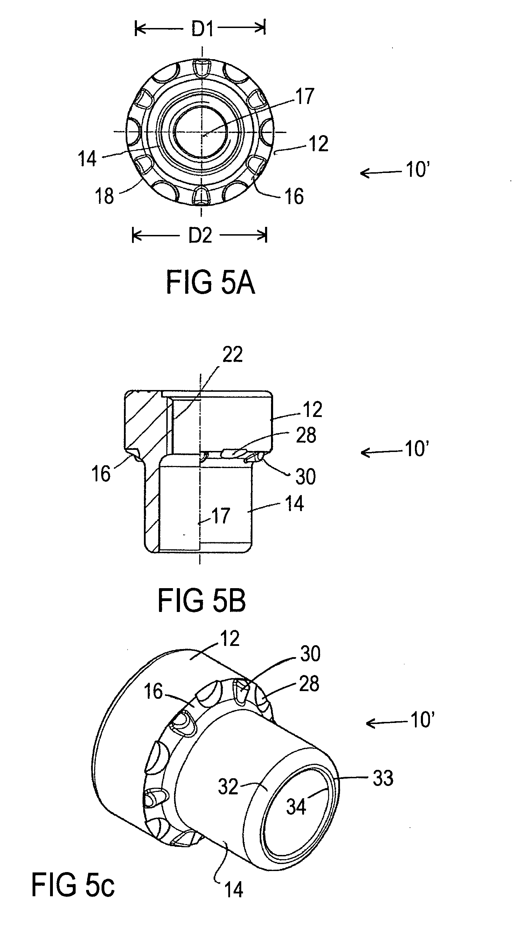

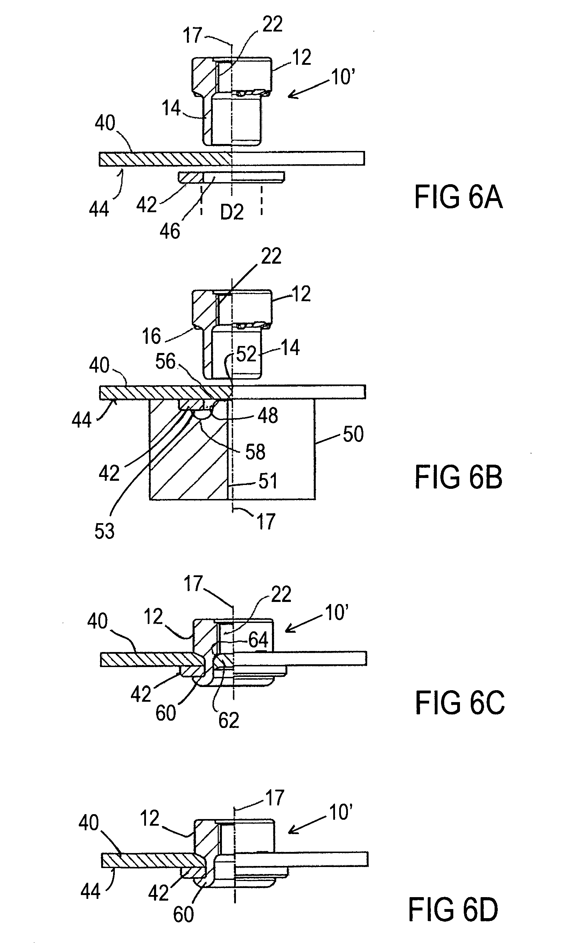

Instead of a bolt element 10 a nut element 10' can also be used as is shown in Figs. 5A to 5C. The distinction here lies above all in the fact that the nut element is a hollow element without a shaft part and is provided with a thread cylinder 22 in the form of an internal thread within the flange 12. The outer diameter of the thread is smaller than the inner diameter of the rivet section 14. A ring shoulder 64 is present at the transition from the hollow space of the rivet section into the thread cylinder 22. The way the nut element is attached to a workpiece is shown in Figs. 6A to 6D.

The Figs. 6A to 6D are provided with the same reference numerals as Figs. 2A to 2C and 4A to 4C, the correspondence can be clearly recognized and a renewed detailed description is unnecessary.

Here it is not appropriate to permanently fix the piercing slug within the hollow space of the beaded over rivet section, but rather the piercing slug is here subsequently removed, as can be seen by a comparison of the Figs. 6C and 6D.

The piercing slug 62 which is pierced out of the workpiece 40 by the central post 52 of the die button 50 is first brought inside the hollow rivet section 14 into the engagement with the ring shoulder 66 by the transition of the hollow rivet section into the internal thread 22. Subsequently, in a second processing step, which takes place following the processing step which has been completed in Fig. 6C, the piercing slug 62 is removed from the rivet section 14.

The removal of the piercing slug 62 can, for example, take place with a plunger and a further die button (not shown) which supports the component assembly in accordance with Fig. 6C from below. The likewise not shown plunger is then guided through the hollow element 10' and presses the piercing slug downwardly into a passage of the further die button which is dimensioned in order to remove the piercing slug by gravity and/or by an air blast.

The removal of the piercing slug could also take place after the completion of the component assembly in accordance with Fig. 6 in a separate plant, for example by means of a bolt which is screwed into the internal thread 22.

The invention further relates to a combination of a washer 42, in particular a metal washer 42 with a die button 50 for the attachment of a fastener element 10, 10' having a rivet section 14 to a workpiece 40, with the die button being provided to receive the washer 42 and also having a central post 52 the end face 54 of which lies at least flush with the side 43 of the washer 42 adjacent to the workpiece 40, and optionally projects beyond this side of the washer 42, with a ring gap 48 being provided between the aperture of the washer 42 and the central post 52 of the die button and with the central post 52 being surrounded at the side of the washer 54 remote from the workpiece 40 by a concavely rounded ring surface 58 of the die button.

In this respect the washer 42 preferably lies in a ring recess 53 of the die button which surrounds the central post and the side of the washer adjacent to the workpiece is at least approximately flush with the end face 55 of the die button 50 radially outside of the washer 42.

Finally, the invention also includes a die button 50 for the attachment of a fastener element 10, 10' having a rivet section 14 to a workpiece 40, with the die button 50 being provided at its one end face 55 to receive a washer 42 and also having a central post 52 of which he end face 54 at least lies flush with the side of the washer 42 adjacent to the workpiece 40, and optionally projects beyond this side of the washer, with a ring gap 48 being provided between the hole of the washer 42 of the central post 52 of the die button 50 and the central post 52 being surrounded at the side of the washer remote from the workpiece 40 by a concavely rounded ring surface 58 of the die button 50.

A ring recess 53 is also preferably provided here at the said end face 55 of the die button 50 and is so dimensioned that in operation the washer 52 surrounds the central post at the side of the washer adjacent to the workpiece, at least approximately flush with the end face of the die button radially outside of the washer. The end faced of the central post can be rounded, as shown in Figs. 2B, 4B and 6B or it can have an at least substantially conical raised portion.

In all embodiments materials can be named as an example from the material of the fastener elements which in the context of cold deformation achieve the strength values of class 8 in accordance with the ISO standard or higher, for example a 35B2 alloy in accordance with DIN 1654. Also aluminum alloys, in particular those of higher strength can be used for the fastener elements, for example AIMg5. Fastener elements of higher strength magnesium alloys, such as for example AM50, can also be considered.

### Reference numeral list

- 10: fastener element (bolt element or nut element)
- 12: flange
- 14: rivet section
- 16: workpiece contact surface
- 17: central longitudinal axis of the fastener element
- 18: side of the flange
- 20: shaft part
- 22: thread cylinder
- 24: contact surface for a further component
- 26: features providing security against rotation
- 28: recess providing security against rotation
- 30: nose providing security against rotation
- 32: rounded edge
- 33: free end face of the rivet section
- 34: conical surface
- 40: workpiece
- 42: washer
- 43: side of the washer adjacent to the workpiece
- 44: side of the workpiece adjacent to the die button
- 45: side of the workpiece remote from the die button
- 46: hole, aperture of the washer 42
- 48: ring gap
- 50: die button
- 51: pressure release bore
- 52: central post of the die button
- 53: ring recess
- 54: end face of the central post adjacent to the workpiece
- 55: end face of the die button adjacent to the workpiece
- 56: rounded edge of the central post
- 58: concave ring recess
- 60: rivet bead
- 62: piercing slug
- 64: ring shoulder

## Claims

1. A method for the attachment of a fastener element (10, 10') to a workpiece (40) with the aid of a washer (42) in particular of a metal washer and also a die button (50), wherein the fastener element has a flange (12) of larger diameter (D1), a rivet section (14) of smaller diameter (D2) which extends away from the flange (12) and a workpiece contact surface (16) at the side of the flange (12) adjacent the rivet section (14), wherein the workpiece contact surface (16) surrounds the rivet section (14) and the die button (50) is provided to receive the washer (42) and also has a central post (52) of fixed position in the die button, with the end face (54) of the central post being at least flush with the side of the washer (42) adjacent the workpiece (40) and optionally projecting out of this side of the washer, wherein the non-pre-pierced workpiece (40) is arranged in front of the said end face (54) of the central post (52) or in front of or on this washer (42) and is pierced in the region of the end face of the die button (50) by means of the free end (33) of the rivet section (14) of the fastener element (10, 10'), which is moved towards the side of the workpiece (40) remote from the die button, in conjunction with the central post (52) and the rivet section (14) of the fastener element is guided through a ring gap (48) located between the hole (46) of the washer and the central post (52) of the die button and is reshaped, by means of a generally concavely rounded ring surface (58) of the die button surrounding the central post at the side of the washer (42) remote from the workpiece (40), to a rivet bead (60), with the workpiece (40) and the washer (42) being clamped between the workpiece contact surface (16) of the fastener element and the rivet bead (60).

2. A method in accordance with claim 1, wherein the workpiece (40) consists of a composite workpiece, in particular of a fiber reinforced duroplastic ma-terial and the material is crumbled in the region of the end face (33) of the rivet section (14).

3. A method in accordance with claim 1 or claim 2, wherein features (26) providing security against rotation are provided at the workpiece contact surface (16) and are brought into engagement with the material of the workpiece by the movement of the fastener element (10, 10') towards the workpiece (40).

4. A method in accordance with any one of the claims 1 to 3, wherein the fastener element is a bolt element (10) of which the shaft part (20), which preferably has a thread (22), extends away from the side of the flange (12) remote from the rivet section (14) and the slug (62) pierced from the workpiece is brought inside the rivet section (14) and into engagement with the base of the rivet section by the central post (52) of the die button (50).

5. A method in accordance with any one of the claims 1 to 3, wherein the fastener element (10') is a hollow nut element and the slug (62) which is punched out of the workpiece is brought by the central post (52) of the die button (50) inside the hollow rivet section (14), i.e. into engagement with the shoulder (64) formed by the transition from the hollow rivet section (14) into the internal thread (22) and is subsequently removed from the rivet section (14).

6. A method in accordance with claim 5, wherein the removal of the slug (62) is carried out after the attachment of the hollow nut element (10') by a plunger which is moved through the thread (22) of the nut element.

7. A method in accordance with any one of the preceding claims, wherein the end face (54) of the central post (52) has a rounded or at least generally conical raised portion and is used in order to indent the piercing slug or to deform it conically and thus to reduce its diameter which facilitates the introduction into the rivet section (14).

8. A combination of a washer (42), in particular of a metal washer with a die button (50) for the attachment of a fastener element (10, 10') having a rivet section (40) to a workpiece (40), in particular in accordance with a method in accordance with one of the claims 1 to 7, wherein the die button (50) is designed to receive the washer and also has a central post (52) the end face (54) of which lies at least flush with the side of the washer (42) adjacent the workpiece, and optionally projects beyond this side of the washer (42), wherein a ring gap (48) is provided between the hole (46) of the washer and the central post (52) of the die button (50) and the central post is surrounded at the side of the washer(42) remote from the workpiece (40) by a concavely rounded ring surface (58) of the die button (50).

9. A combination in accordance with claim 8, wherein the washer is accommodated in a ring recess (53) of the die button which surrounds the central post (52) and the side of the washer (42) adjacent the workpiece (40) lies at least substantially flush with the end face (3) of the die button (50) radially outside of the washer (42).

10. A die button (50) for the attachment of a fastener element (10, 10') having a rivet section (14) to a workpiece (40), in particular for use in a method in accordance with one of the claims 1 to 7 or in a combination in accordance with claim 8 or claim 9, wherein the die button (50) is provided at its one end face (55) to receive the washer (42) and also has a central post (52) the end face (54) of which lies at least substantially flush with the side of the washer (42) adjacent the workpiece (40) and optionally projects beyond this side of the washer (42), with a ring gap (48) being provided between the hole (46) of the washer and the central post (52) of the die button and the central post (52) being surrounded at the side of the washer (42) remote from the workpiece (40) by a concavely rounded ring surface (56) of the die button (50).

11. A die button in accordance with claim 10, with a ring recess (53) at the said end face (55) of the die button (50) which is dimensioned such that in operation the washer (42) which surrounds the central post lies, at the side of the washer (42) facing the workpiece, at least generally flush with the end face (55) of the die button radially outside of the washer (42).

12. A die button in accordance with claim 10 or claim 11, wherein the end face (54) of the central post (52) has an at least substantially conical shape.
